# EUROPÄISCHE PATENTSCHRIFT

(11) **EP 4 200 264 B1**
(45) Veröffentlichungstag und Bekanntmachung des Hinweises auf die Patenterteilung: **25.12.2024**
(21) Anmeldenummer: 21802235.8
(22) Anmeldetag: 27.10.2021
(51) Int. Cl.: B22F 3/04, B22F 3/10, B22F 3/22, B22F 10/60, B33Y 10/00, B33Y 40/20, C04B 35/622, C04B 35/634, C04B 35/638, C22C 1/04

(54) **VERFAHREN ZUR HERSTELLUNG VON FORMKÖRPERN DURCH SINTERN**
METHOD FOR PRODUCING MOULDINGS BY MEANS OF SINTERING
PROCÉDÉ DE FABRICATION DE CORPS MOULÉS PAR FRITTAGE

(30) Priorität: 17.11.2020 EP 20208200
(43) Veröffentlichungstag der Anmeldung: 28.06.2023
(73) Patentinhaber: Element 22 GmbH, 24148 Kiel (DE)
(72) Erfinder: SCHAPER, Johannes Geronimo, 24867 Dannewerk (DE); JAECKEL, Manfred, 27912 Loxstedt (DE)
(74) Vertreter: Raffay & Fleck
(86) Internationale Anmeldenummer: PCT/EP2021/079821
(87) Internationale Veröffentlichungsnummer: WO 2022/106166

(56) Entgegenhaltungen:
- EP-A1- 0 995 525
- WO-A2-2010/026016
- DE-A1- 102018 129 162
- US-A1- 2017 088 471

## Beschreibung

Die vorliegende Erfindung betrifft ein Verfahren zur Herstellung eines Formkörpers durch Sintern gemäß dem Oberbegriff des Anspruchs 1. Das Verfahren ist dabei insbesondere für die pulvermetallurgische Herstellung von Formkörpern geeignet, kann aber ebenso gut auch für die Herstellung von Formkörpern aus keramischem Material unter Einbeziehung einer Sinterverdichtung und -verfestigung eingesetzt werden.

Die Herstellung von metallischen Formkörpern mittels pulvermetallurgischer Verfahren ist eine seit langem bekannte und auch in der Massenproduktion praktizierte Vorgehensweise. Gleiches gilt für die sinterbasierten Herstellung von Keramikformkörpern. Insbesondere werden Verfahren praktiziert, bei denen zunächst aus einem bereitgestellten Ausgangsmaterial in Form von einer Mischung eines Metallpulvers, bzw. eines Keramikpulvers mit Bindermaterial, einem sogenannten Feedstock, ein Grünteil gefertigt wird. Alternativ kann auch ein Ausgangsmaterial, das ausschließlich Metall- oder Keramikpulver enthält, in einem Pulverbett angeordnet und kann anschließend durch gezieltes Einbringen von Bindermaterial in das Pulverbett ein Grünteil gefertigt werden. In beiden Fällen wird nach einem unter Einsatz eines Lösungsmittels erfolgenden chemischen Entbindern ein sog. Braunteil erhalten, welches lediglich noch einen Binderanteil, das sog. Backbone, enthält, der nicht mehr mit den üblicherweise verwendeten Lösungsmitteln, wie z.B. Aceton, Hexan oder Ethylacetat, chemisch, sondern vielmehr thermisch entfernt werden kann. Nach dem thermischen Entbindern wir das erhaltene Rohteil in einem Sinterschritt komprimiert und verfestigt. Dabei unterscheiden sich Grünteil und Braunteil regelmäßig durch einerseits den Gehalt an Bindermaterial im Materialgerüst, andererseits durch die Zusammensetzung des Binders. Grünteile enthalten in der Regel einen höheren Binderanteil und stets jedenfalls auch solche Binderkomponenten wie z.B. Weichmacher und Wachse, die mittels eines Lösungsmittels chemisch zu entfernen sind. Zudem enthalten die Grünteile aber auch einen Bestandteil eines weiteren Binders, der nicht chemisch ausgelöst, sondern durch Erhitzen ausgetrieben, also thermisch entbindert wird, also desjenigen Binders, der im Braunteil noch verbleibt. Grünteile sind also aus einem Ausgangsmaterial mit einem Mehrkomponentenbindersystem und den Metall- oder Keramikpulverpartikeln gebildet.

Es gibt aber auch Verfahren, bei denen sogleich ein Braunteil hergestellt wird, das keinen Anteil an chemisch mittels Lösungsmitteln zu entfernenden Bindermaterialien enthält. Diese Braunteile sind häufig aus einer Ausgangsmasse, einem Feedstock, hergestellt, die einen geringeren Anteil eines Bindermaterials und normalerweise gerade einen solchen, der eben nicht mit den üblichen Lösungsmitteln chemisch zu entbindern ist, aufweist.

Die Formgebung zum Bilden des Grünteils kann auf verschiedene Arten erfolgen. In einfachen Varianten geschieht dies durch einfache Pressformung in Pressformen, aus denen die Formteile ausgeformt werden, erst chemisch, dann thermisch entbindert und abschließend gesintert werden. Es kommen aber auch andere Formgebungsverfahren infrage, so zum Beispiel MIM (Metal Injection Moulding), Schlickerguss, Extrusion oder - dies zunehmend mehr - auch additive Formgebungsverfahren wie das 3-D-Druckverfahren.

Während zunächst überwiegend Stahl mit unterschiedlicher Legierung, aber auch Kupfer und Bronze für die pulvermetallurgische Herstellung von Formkörpern verwendet worden war, ist zuletzt der Fokus auch auf die Verarbeitung von gegenüber den genannten Metallen deutlich reaktionsfreudigeren und stärker mit insbesondere Sauerstoff reagierenden Metallen, hier als reaktive Metalle bezeichnet, gefallen. Zu diesen hier als reaktive Metalle bezeichneten Metallen zählen insbesondere Titan oder Titanlegierungen, Aluminium oder Aluminiumlegierungen und Magnesium oder Magnesiumlegierungen. So werden beispielsweise im Bereich der Medizintechnik, aber auch in anderen Industriebereichen diverse Komponenten heute pulvermetallurgisch aus Titan bzw. Titanlegierungen hergestellt, zum Beispiel Gehäuse für implantierbare Insulinpumpen oder dergleichen.

Eine Herausforderung bei der sinterbasierten Herstellung von Formkörpern, bei der die Formkörper in einem Sinterschritt verdichtet werden, besteht neben einer Berücksichtigung der Materialschrumpfung beim Sintern, in dem Erreichen einer gewünscht hohen Materialdichte und Festigkeit des Sinterteils. Denn zunächst einmal ist das Ausgangsmaterial vor dem Sintern mit Poren und bisweilen auch mit Fehlstellen durchsetzt. Diese Poren und Fehlstellen rühren aus zweierlei Entstehungsmechanismen:
Einerseits können bereits im Zuge der Formgebung des Grünteils prozessbedingte Lücken, in der Regel größere, auch als Makroporen bezeichnete, Poren oder aufgrund einer Delamination auftretende Querlunker, im Materialgerüst durch ein ungenügendes Ausfüllen des von den Grünteilen umschlossenen Raums mit dem Ausgangsmaterial im Formgebungsprozess entstehen oder auch durch eine ungenügende Verbindung von lagenweise aufgetragenen Pulverschichten. Solche Fehlstellen können sowohl bei additiven Fertigungsverfahren wie dem 3-D-Drucken, als auch in einem Pressvorgang, aber auch beim MIM, beim Schlickerguss oder bei der Extrusion auftreten.

Andererseits bilden sich - prozessbedingt - Mikroporen aus, wenn zunächst das Grünteil, nachfolgend dann auch das Braunteil entbindert wird: Dort wo zunächst Binderpartikel angeordnet waren, entstehen diese zwischen den ansonsten dicht gepackten Metallpartikeln liegenden Mikroporen.

Während die Mikroporen, die beim Entbindern entstehen, durch geeignete Parameterwahl des Sinterprozesses in der Regel geschlossen werden können, das Material im Sintervorgang hoch verdichtet werden kann, stellen die bereits im Formgebungsprozess des Grünteils entstehenden Fehlstellen, wie eben die Makroporen oder Querlunker, ein größeres Problem dar. Denn diese können häufig auch in einem an das thermische Entbindern sich anschließenden Sintervorgang nicht mehr vollständig geschlossen werden. Während die vorstehend genannten Mikroporen auch durch ein Umlagern der Pulverpartikel nicht geschlossen werden können, als Freiräume zwischen eng aneinander liegenden, dicht gepackten Pulverpartikeln unvermeidbar in dem Grünteil, bzw. dem Braunteil zu finden sind, erst im Sintervorgang durch dort auftretende Verformung der Pulverpartikel und die Pulverpartikel verbindende Diffusionsprozesse geschlossen werden, sind die Fehlstellen, wie Makroporen oder Querlunker, so beschaffen, dass sie grundsätzlich durch Umlagern der Pulverpartikel aufgefüllt werden können. An den Positionen solcher Fehlstellen "fehlt" gleichermaßen ein oder "fehlen" sogar mehrere Pulverpartikel des verwendeten Materialpulvers.

Um nun die im Sintervorgang nicht zu schießenden Fehlstellen zu beseitigen, werden Sinterbauteile gerade dann, wenn es auf eine Kompaktheit des Bauteils und eine hohe Dichte, also eine geringe Porosität, des fertigen Teils ankommt, weiteren, nach dem Sinterprozess durchgeführten Behandlungsschritten unterzogen, um die Materialdichte weiter zu erhöhen und die verbliebenen Makroporen zu verschließen. Hier findet häufig das sogenannte heißisostatische Pressen (HIP) Anwendung, das eben an den nach dem Sinterprozess erhaltenen schon verdichteten Formkörpern angewendet wird. Hierbei werden die fertig gesinterten Formkörper in einem Behandlungsraum mit einem unter einem hohen Druck stehenden Medium, typischerweise einem Inertgas, beaufschlagt und zugleich einer hohen Temperatur ausgesetzt. Je nach dem verarbeiteten metallischen oder keramischen Material werden hier hohe Drücke, typischerweise 1000 bar und höher, oft bis zu mehrere 1000 bar, benötigt sowie hohe Temperaturen, typischerweise mehrere 100 °C, nicht selten bis über 1000 °C). Bei der Prozessierung von reaktiven Metallen herrschen zudem hohe Anforderungen an die Reinheit des Pressmediums, um eine Kontamination der Bauteile, insbesondere durch Reaktion mit Sauerstoff, zu vermeiden. Nicht zuletzt diese Anforderungen an die Prozessbedingungen machen das heißisostatische Pressen zu einem aufwendigen und kostspieligen Verfahren, für das es nur wenige Anbieter am Markt gibt. Zudem ist nicht für alle Materialien sichergestellt, dass ein heißisostatisches Pressen des gesinterten Formkörpers überhaupt durchgeführt werden kann.

Einerseits müssen weiterhin Anlagen für diesen Verfahrensschritt so ausgelegt und gebaut werden, dass sie den hohen Drücken zuverlässig standhalten und es zu keinen - bei diesen hohen Drücken verheerenden - Unfällen kommen kann. Andererseits ist das Erzeugen derart hoher Drücke und hoher Temperaturen energieaufwendig. Dabei zeigt sich zudem, dass die unter dem hohen anliegenden Druck zwar zunächst geschlossenen Fehlstellen sich vielfach nach dem hei-βisostatischen Pressen aufgrund des in ihrem Innern gefangenen, sich ausdehnenden Gases bei thermischer Beanspruchung des Formteils wieder öffnen können, sodass sich in einer Art Rückstelleffekt jedenfalls ein Teil der Poren wieder ausbildet. Schließlich erfordert der für das heißisostatische Pressen einzustellende hohe Druck, typischerweise im Bereich vom 1000 bis 2000 bar, den Einsatz einer großen Menge des Prozessmediums, z.B. eines Gases, was - gerade dann, wenn das Prozessmedium höchste Anforderungen an die Reinheit zu erfüllen hat - einen deutlichen Einfluss auf die Kosten des Verfahrens nimmt.

Wenn darüber hinaus die zu verschließenden Fehlstellen, wie z.B. Makroporen, nicht im Innern des Formkörpers eingeschlossen, sondern nach außen offen liegend sind, kann durch ein heißisostatisches Pressen ein Verschließen der Fehlstellen nicht erreicht werden. Denn dann dringt das unter Druck stehende Medium, z.B. ein Inertgas wie Argon, eben auch in die offenen Fehlstellen ein und hält diese offen. Dies ist von besonderer Relevanz, da es bei einigen additiven Fertigungsverfahren, wie 3D-Druckverfahren beim schichtweisen Auftragen des Materials, z.B. beim Drucken, zwischen den Schichten zu einer Art Delamination kommen kann, die zum Teil erst beim Entbindern oder sogar erst beim Sintern sichtbar wird. Eine solche Delamination, die einen erheblichen Mangel des Formteils darstellt, kann teilweise aber nach dem Sintern noch nicht erkennbar zu Tage treten, sondern erst bei einer mechanischen Beanspruchung des Formteils Auswirkungen zeigen. Diese auf eine Delamination zurückgehenden an der Oberfläche des Formteils auftretenden, bzw. bis zu der Oberfläche reichenden Fehlstellen haben gerade bei dynamischer Beanspruchung des Formteils einen besonders hohen Einfluss auf die sogenannte Wechsellast. Dies kann im schlimmsten Fall zu einem Versagen eines so hergestellten Formteils, dies auch in kritischen Anwendungssituationen, führen.

Es wurden weiterhin Verfahren beschrieben, bei denen nach dem Formgebungsprozess und vor dem Sintern eine Verdichtung des noch unfertigen Bauteils durch Druckbeaufschlagung stattfindet. So beschreibt die EP 0 995 525 A1 ein Vorgehen, bei dem, z.B. mit MIM ein Grünteil hergestellt, dieses Grünteil entbindert und anschließend gesintert wird, wobei das Grünteil oder des entbinderte Grünteil verdichtet wird durch Beaufschlagen mit einem unter Druck stehenden Inertgas, wie z.B. Argon. Dabei sieht das dort offenbarte Verfahren die Beaufschlagung des Grünteils mit einem vergleichbar hohen Druck von wenigstens 1000 bar, in vielen beschriebenen Versuchsbeispielen sogar deutlich höher, vor, was diese Vorgehensweise apparativ aufwendig und kostspielig macht.

Die DE 10 2018 129 162 A1 beschreibt ein Vorgehen, bei dem ein Formkörper zunächst aus einem Gemisch eines Binders mit einem keramischen Granulat in einem additiven Fertigungsverfahren als Grünteil gebildet, das Grünteil dann teilweise entbindert, anschließend bei einer deutlich erhöhten Temperatur für eine bestimmte Dauer angesintert und anschließend lackiert wird. Das so teilentbinderte und angesinterte und lackierte Grünteil wird dann in einem kalten nassisostatischen Pressvorgang verdichtet. Anschließend wird der vor dem kalten nassisostatischen Pressen aufgebrachte Lack entfernt, das Grünteil fertig entbindert und dann gesintert. Ein für das kalte nassisostatische Pressen nach der Lehre dieser Schrift zu verwendender Druck ist nicht offenbart.

Die US 2017/088471 A1 beschreibt ein Verfahren zum Herstellen von Keramikbauteilen in einem Kaltsinterverfahren. Insbesondere wird auch das Herstellen von laminierten Verbundbauteilen beschrieben, die aus unterschiedlichen Keramiklagen gebildet sein können. Diese können vor dem eigentlichen Kaltsintern durch Druckbeaufschlagung laminiert, also untereinander verbunden werden.

In der WO 2010/026016 A2 ist ein Verfahren zum Herstellen von gesinterten Keramikformteilen beschrieben. Dabei werden aus einem Ausgangsmaterial, das Keramikpartikel und Binder enthält, Grünteile durch Pressformen hergestellt. Der Ausgangmasse können für eine Verbesserte Formgebung Zusatzstoffe beigegeben sein, z.B. ein Weichmacher.

Hier soll mit der Erfindung Abhilfe geschaffen werden, indem ein Verfahren zur Herstellung eines Formkörpers unter Einbeziehen eines Sinterschritts angegeben wird, welches eine Reduzierung bzw. ein Schließen von Fehlstellen, wie Makroporen oder Querlunkern, bereits vor dem Sinterschritt erlaubt und damit die durch das Sintern erhaltene Materialdichte verbessert, und so eine erst nach dem Sintern erfolgende Nachbehandlung, wie zum Beispiel ein heißisostatisches Pressen, überflüssig macht.

Diese Aufgabe wird erfindungsgemäß gelöst durch ein Verfahren mit den Merkmalen des Patentanspruchs 1. Vorteilhafte Weiterbildungen des erfindungsgemäßen Verfahrens sind in den abhängigen Ansprüchen 2 bis 15 angegeben.

Ein erfindungsgemäßes Verfahren zur Herstellung eines Formkörpers durch Sintern beinhaltet dabei zunächst einmal, wie dies auch im Stand der Technik üblich ist, folgende Schritte:
a. Bereitstellen eines ein Metall- und/oder Keramikpulver enthaltenden Ausgangsmaterials,
b. Formen eines Grünteils aus dem Ausgangsmaterial durch entweder Formen des Ausgangsmaterials, wenn dieses eine Mischung aus dem Materialpulver und Bindermaterial aufweist, oder durch Einbringen eines Bindermaterials in ein aus dem Ausgangsmaterial gebildetes Pulverbett,
c. chemisches Entbindern und/oder Entbindern mittels eines Lösungsmittels des Grünteils zum Erhalten eines Braunteils,
d. thermisches Entbindern des in Schritt c. erhaltenen Braunteils,
e. Verdichten des Braunteils zu dem Formkörper durch Sintern.

Diese Verfahrensschritte sind, wie bereits erwähnt, auch bei den aus dem Stand der Technik bekannten Herstellungsverfahren für Formkörper üblich, die pulver-metallurgisch oder sinterbasiert aus Keramikpulver hergestellt werden. Das Besondere an dem erfindungsgemäßen Verfahren ist nun, dass das Braunteil nach dem Schritt c. und vor dem Schritt d. zunächst mit einem das in dem Braunteil noch vorhandene, durch das vorhergehende chemische Entbindern und/oder Entbindern mittels eines Lösungsmittels in Schritt c. nicht entfernte Bindermaterial erweichenden Weichmacher der auch als Plastifizierungsmittel bezeichnet werden kann, behandelt wird und weiterhin vor dem Schritt d. nach der Behandlung mit dem Weichmacher durch Beaufschlagen mit einem unter einem erhöhten Druck stehenden Medium einem isostatischen Pressvorgang unterzogen wird.

Bei dem erfindungsgemäßen Verfahren wird also, bevor der abschließende Sinterschritt durchgeführt wird, das aus dem mit Binder zusammengehaltenen Materialpulver gebildete Formteil in einem isostatischen Pressvorgang verdichtet, um insbesondere in dem unter Schritt b. durchgeführten Formgebungsvorgang entstandene Fehlstellen, wie Makroporen oder sonstige Defekte in dem Materialgefüge zu verschließen, gegebenenfalls auch bereits durch ein chemisches Entbindern des Grünteils gebildete Makroporen zu schließen. Dabei wirkt der Druck, da der Pressvorgang isostatisch ausgeführt wird, allseits auf das Formteil ein und führt so zu einer gleichmäßigen Komprimierung, ohne die Gefahr einer insbesondere eindimensionalen Veränderung der gegebenen Form des Formkörpers hervorzurufen. Der Pressvorgang wird dabei insbesondere bei ausgeformtem, "freiliegenden" Formteil durchgeführt. Aufgrund der durch diesen Schritt erzielten Verdichtung können in dem nachfolgend durchgeführten Sinterschritt die einzelnen Partikel des Pulvermaterials, also des Metall- und/oder Keramikpulvers, besonders gut miteinander verbunden werden, ohne dabei etwa in größerem Anteil unerwünschte Makroporen oder andere Fehlstellen auszubilden. Zwar ist ein durch isostatisches Pressen mittels beaufschlagen mit einem unter Druck stehenden Medium schon vor dem abschließenden Sinterschritt durchgeführtes Verdichten bereits bekannt und beschrieben. Allerdings erfordert dies bei den bekannten Verfahren das Anlegen eines hohen Drucks sowie ein Vorgehen in einem komplizierten Verfahrensablauf. Diese aus dem Stand der Technik bekannten Nachteile werden bei dem erfindungsgemäßen Verfahren dadurch vermieden, dass das Braunteil nach dem Schritt c. und vor dem durchführen des isostatsichen Pressens zunächst mit einem das in dem Braunteil noch vorhandene, durch das vorhergehende chemische Entbindern und/oder Entbindern mittels eines Lösungsmittels in Schritt c. nicht entfernte Bindermaterial erweichenden Weichmacher behandelt wird. Der Weichmacher besorgt in dem Bindermaterial des Grünteils eine Erhöhung der Duktilität dieses Bindermaterials. So kann mit vergleichsweise niedrigem angelegtem Druck von insbesondere nicht mehr als 500 bar, ein Verdichten des Materials im Braunteil erhalten werden, dass dann gleichwohl dazu führt, dass der Formkörper nach dem Sintern eine besonders hohe Materialdichte aufweist. Eine Nachbehandlung des Formkörpers nach dem Sintern zur Erhöhung von dessen Materialdichte, wie dies im Stand der Technik häufig unternommen wird, beispielsweise und insbesondere durch ein heißisostatisches Pressen (HIP) des fertigen Metallteils, ist so nicht erforderlich. Weiterhin kann es bei nach dem Sintern einem heißisostischen Pressen (HIP) unterworfenen Formkörpern bei einer nachgelagerten Wärmebehandlung oder Belastung (insbesondere Wechsellast) der Formköper zu einem erneuten Öffnen der im HIP-Verfahren verdichteten und geschlossenen Poren kommen, wenn diese noch Gaseinschlüsse enthalten, dies insbesondere wenn nicht unter Vakuumbedingungen gesintert wurde. Dieser Effekt ist bei einem erfindungsgemäßen Vorgehen nicht zu beobachten, da die Makroporen bereits vor dem Sintern eliminiert werden. Somit gibt es nach dem Sintern keine großvolumigen Gaseinschlüsse.

Auch deshalb, da bei dem erfindungsgemäßen isostatischen Pressen des noch nicht gesinterten (Braunteils noch keine Materialverbindung zwischen den Pulverpartikeln besteht, lediglich das Gemenge aus dem zuvor durch den Weichmacher erweichten Binder und Materialpulver verformt und komprimiert werden muss, kann das Pressen mit einem weitaus geringeren Druck erfolgen als dies beim nach dem Sintern stattfindenden heißisostatischen Pressen (HIP) erforderlich ist. Auch ist ein Erhöhen der Temperatur auf mehrere 100 °C bis zu über 1000 °C, wie dies beim heißisostatischen Pressen (HIP) des fertig gesinderten Formteils üblich und erforderlich ist, nicht notwendig. Dadurch ergibt sich nicht nur ein erheblich geringerer Energiebedarf für einen solchen erfindungsgemäßen, an dem nicht gesinterten Formteil durchgeführten isostatischen Pressvorgang im Vergleich zu dem Energiebedarf beim nach dem Sintern durchgeführten heißisostatischen Pressen (HIP). Auch der apparative Aufwand, der für den Schritt des isostatischen Pressens des noch nicht gesinterten Braunteils zu betreiben ist, ist erheblich geringer als derjenige für das nach dem Sintern durchgeführte hei-βisostatische Pressen (HIP), aber auch als derjenige, den die aus dem Stand der Technik bekannten, vor dem abschließenden Sintern durchgeführten Press- und Verdichtungsverfahren erforderlich machen. insbesondere sind aufgrund des geringeren anzulegenden Drucks und auch der geringeren Temperaturen weitaus niedrigere Sicherheitsanforderungen an den apparativen Aufbau gestellt, in dem der erfindungsgemäße isostatische Pressvorgang an dem mit dem Weichmacher behandelten Braunteil durchgeführt werden soll.

Der erfindungsgemäß zum Erweichen des Bindermaterials im Braunteil eingesetzte Weichmacher kann vorteilhafterweise so gewählt sein, dass er vor dem eigentlichen Sintervorgang ebenfalls, idealerweise in einem ohnehin vorgesehenen Entbinderungsschritt(en) mit entfernt und ausgetragen wird. Als Weichmacher kommen hier die üblichen und bekannten Weichmacher in Betracht, die für die an sich bekannten Bindersysteme und die darin verwendeten Polymere wirksam sind und eingesetzt werden können, solch ein Weichmacher kann z.B. auch Wasser sein, wenn bspw. Polyamide als Binderkomponenten verwendet werden. Idealerweise sollten solche Weichmacher sich spätestens bei denjenigen Temperaturen, die für ein thermisches Entbindern in dem pulvermetallurgischen Herstellungsverfahren vorgesehen sind, verflüchtigen bzw. bei diesen Temperaturen aus dem Braunteil, bzw. aus dem zu sinternden Teil ausgetrieben werden. Es ist auch denkbar, einen eingesetzten Weichmacher in einem chemischen und/oder lösemittelbasierten Schritt zu entfernen.

Die Verwendung eines Weichmachers kann auch unter einem anderen Gesichtspunkt von Vorteil sein: Ein Weichmacher kann nämlich auch eine "Klebwirkung" des Bindemittels beinträchtigen, kann die "Klebrigkeit" des Bindemittels erhöhen. Dies kann helfen, bei dem hier beschriebenen isostatischen Pressen des Braunteils die Fehlstellen zu schließen und geschlossen zu halten, da der Binder die einmal geschlossenen Fehlstellen dann durch seine Cohäsionskraft zusammenhält.

Die für ein ausreichendes Erweichen des in dem Braunteil noch verbliebenen Bindermaterials erforderliche Menge des Weichmachers ist je nach Wirksamkeit des Weichmachers vergleichsweise gering. Sie liegt in jedem Fall wesentlich niedriger als der die Menge an Weichmacher, die z.B. für eine zur thermoplastischen Formgebung notwendige Fließfähigkeit dem ursprünglichen für die Herstellung des Grünteils verwendeten Bindersystem beigemengt sein kann. Ein solcher ursprünglich zugesetzter Weichmacher wird jedoch in dem Schritt c. mit ausgetragen, ist in dem anschließend erhaltenen Braunteil nicht mehr vorhanden. Entsprechend können auch durch den nach dem Schritt c. erfolgten (ggf. erneuten) Zusatz von Weichmacher über die Auswahl des Weichmachers und seine Dosierung die für den nachfolgenden isostatischen Pressvorgang benötigten technologischen Eigenschaften des Braunteils, insbesondere des mit dem Weichmacher erweichten Bindermaterials entsprechend den Anforderungen eingestellt werden.

Die eingetragenen Weichmachermengen und die damit veränderbaren Arbeitsbedingungen bei Temperatur und Druck können durch ein- oder mehrfaches Behandeln eingestellt werden, ebenso durch die Auswahl des Weichmachers. Der stärkste Einfluss auf die Erweichung des auch als Backbone bezeichneten, im Braunteil noch verbliebenen Bindermaterials kann bei der Verwendung von Primärweichern erzielt werden, die in der chemischen Zusammensetzung je nach chemischer Zusammensetzung eines verwendeten polymeren Bindermaterials sehr unterschiedliche chemische Strukturen aufweisen können.

Unter Primärweichmachern versteht man Substanzen, die in geringen Konzentrationen das Polymer bereits weichmachen. Bei einem mit Vorteil als Bindermaterial für das Backbone zu verwendenden Polyamidsystem liegen die Werte des eingetragenen Weichmachers bezogen auf den Polymeranteil z.B. im Bereich von 15 bis 30 Gew.-%.

In einem konkreten Beispiel kann dies bei einem Grünteil mit 12 Gew.-% Binder in einem titanbasierten Feedstock mit einem Polymeranteil von 30% im Binder bedeuten, dass nach vollständiger Extraktion der löslichen Komponenten 3,2 Gew.-% Polymer im Braunteil zurückbleiben. Das bedeutet dann eine Aufnahme von 0,56 bis 1,4 Gew.-% Weichmacher um das Braunteil für den nachfolgenden isostatischen Pressvorgang ausreichend duktil zu machen.

Die Menge und Zusammensetzung des für den isostatischen Pressvorgang in dem Braunteil eingesetzten Weichmachers kann, wie bereits erwähnt, eine völlig andere sein als für einen vorhergehenden Formgebungsprozess für das Grünteil. Ein isostatisches Pressen des Braunteils hat gegenüber einem Verdichten des Grünteils mit einem gleichen Ansatz vor allem auch den Vorteil, dass in dem mit dem Weichmacher behandelten Braunteil eine Art flexibler Schwammstruktur gebildet ist, die deutlich besser verdichtet werden kann als ein Grünteil. Zudem verteilt sich der aufgebrachte Druck innerhalb des mittels des Weichmachers erweichten Braunteils deutlich homogener, und es treten nach dem Entspannen keine lokalen Drucknester auf, welche aus einer isolierten Pore entstehen würden.

Die Behandlung des Braunteils kann insbesondere mit einem flüssigen Weichmacher erfolgen. Dies kann z.B. in Form einer Tauchbehandlung, also nach Art eines Imprägnierens, erfolgen.

Das Einbringen des Weichmachers in das Braunteil kann erfindungsgemäß dabei sehr vorteilhaft gelingen, wenn der Weichmacher zuvor in einem Lösungsmittel gelöst wird, welches sehr leicht von der porösen Formteilstruktur des Braunteils aufgesogen wird. Hier können mit Vorteil dieselben Lösungsmittel eingesetzt werden, die auch im Schritt c. zum Einsatz kommen zur chemischen bzw. lösemittebasierten (Vor-)Entbinderung des Grünteils zum Braunteil. Im Fall der Verwendung von Polyamid-basierten Bindersystemen können dies z.B. Lösungsmittel wie z.B.Aceton, Hexan oder Ethylacetat sein.

Wenn der Weichmacher in Konzentrationen von z. B. 10 bis 30Gewichtsprozent im Lösungsmittel verteilt wird, so können sehr niedrige Viskositäten erreicht werden, so dass ein solches Gemisch, je nach Wanddicke des Braunteils, innerhalb von z.B. 30 bis 60 Minuten vollständig in die poröse Struktur des Braunteils hineindiffundieren kann.

Bei dem erfindungsgemäß vor dem Sinterschritt durchzuführenden isostatischen Pressvorgang kann eine gegenüber der Normaltemperatur erhöhte Temperatur angewendet werden, um insbesondere das Bindermaterial zu erweichen und zu einem gewissen Grad fließfähig bzw. plastisch verformbar zu machen. Für die typischerweise bei den pulvermetallurgischen Herstellungsverfahren als Bindermaterialien oder kombiniert in Bindersystemen eingesetzten Polymermaterialien genügen dabei in der Regel z.B. Temperaturen im Bereich von 30 °C bis 200 °C. Aufgrund der typischerweise deutlich geringer eingestellten Temperatur während des Pressvorgangs kann das erfindungsgemäß vor dem Sintern durchgeführte isostatische Pressen, wenn eine Temperaturerhöhung vorgesehen ist, in Abgrenzung zu dem bekannten, an dem fertig gesinterten Formkörper durchgeführten heißisostatischen Pressen (HIP) auch als warmisostatisches Pressen (WIP) bezeichnet werden.

Der für den erfindungsgemäß vor dem Sinterschritt durchgeführten isostatischen Pressvorgang gewählte Druck, unter dem das zum Beaufschlagen des Braunteils verwendete Medium steht, liegt, wie erwähnt, typischerweise deutlich unterhalb desjenigen Drucks, der für ein nach dem Sinterschritt im Stand der Technik durchgeführtes heißisostatisches Pressen (HIP) verwendet wird, und kann insbesondere im Bereich von > 60 bar, vorzugsweise > 80 bar, insbesondere > 100 bar liegen. Auch wenn grundsätzlich auch deutlich höhere Drücke gewählt werden können, insbesondere dann, wenn bei niedrigeren Temperaturen gearbeitet wird, wird man in der Praxis diese nicht einstellen, schon deshalb nicht, um nicht doch auf die aufwendigen und teuren Apparaturen zur sicheren Beherrschung von solch hohen Drücken, wie sie beim heißisostatischen Pressen eingesetzt werden, erforderlich sind. Entsprechend werden bei dem erfindungsgemäßen Verfahren in der Regel keine Drücke oberhalb von 500 bar gewählt werden, meist sogar Drücke von unterhalb 300 bar.

Als Medium, mit dem das Braunteilbeaufschlagt wird, kommen prinzipiell alle möglichen Medien, so fein partikulare Festkörperteilchen, Flüssigkeiten oder Gase in Betracht. Bevorzugt wird als Medium eine Flüssigkeit oder alternativ ein Gas gewählt. Dabei ist darauf zu achten, dass das gewählte Medium bei den gegebenen Bedingungen von Druck und Temperatur während des Pressvorgangs mit dem Materialsystem des Formteils, insbesondere mit dem Metallpulver im Falle eines pulvermetallurgisch herzustellenden Formteils, aber auch allgemein mit dem Binder, nicht in unerwünschter Weise interagiert, insbesondere keine unerwünschten chemischen Reaktionen eingeht oder Rückstände und Einlagerungen bildet. Der erfindungsgemäße, vor dem Sinterschritt durchzuführende Pressvorgang kann beispielsweise unter Einbringen von Wasser als Medium durchgeführt werden. Bevorzugt können aber auch Gase, insbesondere Intergase, Verwendung finden, wie zum Beispiel Argon oder Stickstoff.

insbesondere dann, wenn die durch den erfindungsgemäß vor dem Sinterschritt durchzuführenden Pressvorgang zu verschließenden Fehlstellen, wie etwa Makroporen, offen liegen, d. h. eine Verbindung durch die Oberfläche des Formteils nach außen aufweisen, oder wenn zum Beispiel nach einer Formgebung im additiven Fertigungsverfahren wie z.B. 3-D-Druck zu beobachtende Defekte in einer Flächenverbindungen (Delamination) behoben werden sollen, bietet es sich an und ist in einer vorteilhaften erfindungsgemäßen Weiterbildung vorgesehen, dass das Braunteil nach dem Behandeln mit dem Weichmacher und vor dem Beaufschlagen mit dem unter Druck stehenden Medium mit einer die Außenfläche des Formteils umschließenden Beschichtung, insbesondere einer Polymerbeschichtung, versehen wird. Eine solche Beschichtung kann zum Beispiel in einem Tauchvorgang aufgebracht werden, in dem das Braunteil in ein Bad eines verflüssigten Beschichtungsmaterials, zum Beispiel eines Polymers, getaucht wird und die Beschichtung anschließend erstarrt. Es sind aber auch andere Aufbringungsverfahren, wie zum Beispiel Sprühverfahren oder ein Auftrag mit einem Aufbringungswerkzeug ähnlich jenen für Lacke oder Farben denkbar. Auch ein Umgeben mit einer Folie oder dergleichen, z.B. ein Einschweißen in eine solche Folie oder vergleichbare Umhüllung, ist möglich. Eine solche aufgebrachte Beschichtung schließt einerseits an der Oberfläche des Braunteils bestehende Spalte und Öffnungen, zum Beispiel in einem offenen Porensystem, sodass durch Aufbringen des unter Druck stehenden Mediums auch solche Fehlstellen komprimiert und geschlossen werden können. Andererseits bildet diese Beschichtung auch einen Schutz um das Formteil herum, sodass bei Verwendung eines Mediums, das mit den Bestandteilen des Braunteils reagieren kann oder dessen etwaige Rückstände den Sinterprozess schadhaft beeinflussen könnten, ein Kontakt dieses Mediums mit dem Braunteil verhindert werden kann. So kann zum Beispiel die Verwendung von Wasser als Medium ermöglicht werden, wenn eine solche Beschichtung wasserresistent ist und nach dem vor dem Sinterschritt durchzuführenden Pressvorgang entfernt werden kann, ohne dass Wasserrückstände in einer nicht gewollten Form mit dem Braunteil in Berührung geraten, dort eingelagert werden oder gar reagieren und Sauerstoff in den Formkörper eintragen können.

Die gemäß der vorstehend beschriebenen Weiterbildung aufgebrachte Beschichtung kann insbesondere aus einem chemisch und/oder lösungsmittelbasiert und/oder thermisch abtrennbaren Material gebildet sein. Sie kann aber, wenn z.B. eine Folie oder eine vergleichbare hüllenartige Beschichtung verwendet wird, auch mechanisch entfernbar sein. Ist die Beschichtung thermisch abtrennbar, so kann sie z.B. in einem einheitlichen Prozess gemeinsam mit dem Bindermaterial (dem Backbone) des das Grünteil vor dem Sintervorgang zusammenhaltenden Bindersystems thermisch entbindert bzw. entfernt werden. Bevorzugt ist die Beschichtung allerdings aus einem chemisch und/oder durch ein Lösungsmittel abtrennbaren Material gebildet, sodass die Beschichtung nach dem isostatischen Pressvorgang und vor dem Sinterschritt chemisch und/oder durch Einsatz eines Lösungsmittels entfernt werden kann. Auf diese Weise kann der Anteil an insbesondere organischem Material, der bei einem anschließenden thermischen Entbindern, das regelmäßig in einem durchgehenden Bearbeitungsschritt mit anschließendem Sintervorgang erfolgt, reduziert werden, sodass sich Kontaminationen des Formkörpers durch Einbau von zum Beispiel Kohlenstoff aus dem Beschichtungsmaterial vermeiden, jedenfalls verringern lassen. Auch kann bei einem solchen Vorgehen der in das Braunteil erfindungsgemäß eingebrachte Weichmacher wieder entfernt, z.B. mit einem Lösungsmittel ausgewaschen, werden.

Es ist aber auch denkbar, dass eine Beschichtung auf andere Weise abgetrennt wird, z.B. durch Anlagen eines Unterdrucks, durch Vakuum.

Da nach dem isostatischen Pressvorgang die Beschichtung wieder entfernt wird, kann ein Druckausgleich stattfinden, bei dem Gas aus dem verdichteten Braunteil entweichen kann. Dort stellt sich dann der Umgebungsdruck ein. Dies führt weiter dazu, dass etwaige Rückstelleffekte, bei denen geschlossene Poren durch einen dort weiterhin herrschenden Überdruck wieder geöffnet werden, unterdrückt werden.

Das Formen des Grünteils oder Braunteils in Schritt b. des erfindungsgemäßen Verfahrens kann vorzugsweise durch ein additives Formgebungsverfahren erfolgen, wie durch 3-D-Druck. Es kann aber auch durch MIM, Schlickerguss, Extrusion oder durch einen Formpressvorgang erlangt erfolgen.

Das erfindungsgemäße Verfahren kann als pulvermetallurgisches Verfahren und dabei prinzipiell mit allen möglichen Metallen und Metalllegierungen durchgeführt werden, zum Beispiel mit Stahl, so auch Edelstahl, Bronze, Kupfer und dergleichen. insbesondere eignet es sich aber auch sehr gut für die pulvermetallurgische Herstellung von Formkörpern aus einem verglichen mit Stahl deutlich reaktionsfreudigerem, hier als "reaktiv" bezeichneten Metall, wie Titan, einer Titanlegierung, Aluminium, einer Aluminiumlegierung, Magnesium oder einer Magnesiumlegierung, wofür als Metallpulver entsprechend ein solches eines reaktiven Metalls, wie zum Beispiel Titanpulver, ein Titanlegierungspulver, Magnesiumpulver oder ein Magnesiumlegierungspulver verwendet wird. Angewendet werden kann das erfindungsgemäße Verfahren aber auch auf andere reaktive Metalle wie sog. Superlegierungen auf Nickel- oder Kobaltbasis und auf die Refraktärmetalle Molybdän, Wolfram, Rhenium und Tantal. Als "reaktive Metalle" werden hier insbesondere unedle Metalle bezeichnet, insbesondere solche mit einem Standardpotential E° von < -1,0 V. Auch für die Herstellung von Formteilen aus Hartmetallen, bzw. aus einem Material mit einer metallischen oder keramischen Grundmatrix und darin eingebetteten Partikeln aus Hartmetall, wie z.B. Wolfram- oder Kobaltcarbid, kann das erfindungsgemäße Verfahren verwendet werden. Ebenso kann das erfindungsgemäße Verfahren auch für die sinterbasierte Herstellung von Keramikformkörpern eingesetzt werden, wobei dann ein Keramikpulver und Binder enthaltende Grün- oder Braunteile gebildet und vor dem Sintern mit dem hier offenbarten warmisostatischen Pressen behandelt werden.

Durch das erfindungsgemäße warmisostatische Pressen vor dem Sinterschritt können nicht nur die beim Formgebungsverfahren erhaltenen Fehlstellen geschlossen werden, sondern es kann mit geeigneten Einstellungen von Druck und Temperatur auch bereits eine erste Verdichtung des Braunteils erfolgen, also eine Erhöhung der Packungsdichte der Materialpulverpartikel im Volumen, mithin eine erste Reduzierung der Mikroporösität schon vor dem eigentlichen Sintern.

Die Wirksamkeit der Erfindung konnte von dem Erfinder in Versuchen nachgewiesen werden. Unter anderem wurde von dem Erfinder der nachfolgend beschriebene und in den anliegenden Figuren näher illustrierte und in seinem Ergebnis erläuterte Versuch durchgeführt und wie beschrieben ausgewertet. Dabei zeigen die Figuren:
- Fig. 1: in einer schematischen Darstellung das erfindungsgemäße Vorgehen bei der Durchführung des hier als warmisostatischen Pressen bezeichneten Verfahrensschritts in dem durchgeführten Versuch und
- Fig. 2: in einem Säulendiagramm einen Vergleich der ermittelten Porosität von nach einem erfindungsgemäßen Verfahren hergestellten Sinterformteilen mit der ermittelten Porosität von mit Ausnahme des nicht durchgeführten warmisostatischen Pressens gleich hergestellten Referenzformteilen.

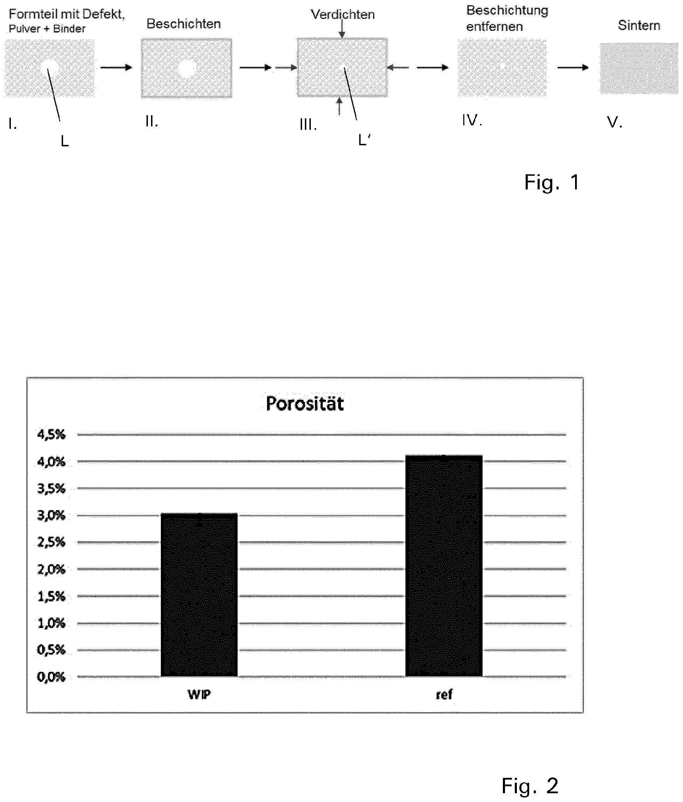

Zur Durchführung des Versuchs wurde eine Platte von etwa 5 mm Höhe aus einem Ti6Al4V-Pulver sowie ein auf Polyamid-Basis gebildetes Bindersystem enthaltenden Ausgangsmaterial, einem Feedstock, gepresst und anschließend in Streifen, bzw. Balken zersägt. Diese Balken enthielten Lufteinschlüsse, sog. Lunker. Dies ist in der mit I bezeichneten Darstellung der Figur 1 gezeigt, wo ein Lunker mit L bezeichnet ist.

Die erhaltenen Balken wurden in Aceton lösemittelentbindert. Anschließend wurde eine Hälfte der Balken (WIP) mit einer Mischung aus Aceton und Weichmacher infiltriert. Nach dem Trocknen wurden die so behandelten Balken mit einer Mischung aus Aceton und einem acetonlöslichen Polymer nassbeschichtet und erneut getrocknet. Nach diesem zweiten Trockenvorgang verblieb auf den Außenflächen der so behandelten Balken eine Beschichtung aus dem Polymer. Dies ist in der Darstellung II der Figur 1 wiedergegeben.

Die verbleibende Hälfte der Balken verblieb als Referenz.

Die erste mit dem Polymer beschichtete Hälfte der Balken wurde einem erfindungsgemäßen, vor einem Sinterschritt durchgeführten Pressvorgang unterzogen (warmisostatischen Pressen, WIP). Diese WIP-Behandlung wurde durch Beaufschlagen mit Argon bei einem Druck von 90 bar und bei zunächst ca. 160°C durchgeführt. Anschließend wurde der Druck gehalten, während die Temperatur abgesenkt wurde. Diese WIP-Behandlung ist in der Darstellung III der Figur 1 veranschaulicht. Nach dieser Behandlung wurden die so behandelten Balken erneut in Aceton entbindert um den Weichmacher und die Polymerbeschichtung wieder zu entfernen (vgl. Darstellung IV in Figur 1).

Anschließend wurden die der WIP-Behandlung unterzogenen Balken sowie die als Referenz behaltenen, unbehandelten Balken in einem gemeinsamen Ofenlauf gesintert. Dies ist in der Darstellung V der Figur 1 veranschaulicht. An den gesinterten Bauteilen wurde eine Dichtebestimmung nach dem Archimedesprinzip durchgeführt. Die Messergebnisse wurden gemittelt und die Mittelwerte sind in Figur 2 aufgetragen. Diese Ergebnisse zeigen, dass die mit der als *WIP* bezeichneten Säule dargestellte Porosität derjenigen Balken, die mit dem vorstehend beschriebenen und erfindungsgemäßen Verfahren behandelt wurden, um ca. 1 % geringer liegt als die mit der als *ref* bezeichneten Säule dargestellte Porosität der nicht behandelten Referenz-Balken. Es ergibt sich also, dass die zunächst in beiden Balkengruppen vorhandenen Lunker L in der WIP-behandelten Gruppe der Balken volumenverkleinert oder sogar gänzlich geschlossen werden konnten. Dies ist in der Figur 1 durch den kleiner dargestellten Lunker L' veranschaulicht.

Es ist an dieser Stelle noch einmal darauf zu verweisen, dass der voranstehend geschilderte und in den Figuren illustrierte Versuch lediglich eine mögliche Vorgehensweise zur Durchführung des erfindungsgemäßen Verfahrens darstellt. insbesondere ist das Verfahren nicht auf pulvermetallurgische Herstellungsverfahren beschränkt, erst recht nicht auf solche mit der in dem Versuch konkret verwendeten Legierung, sondern kann ebenso gut auch mit keramischem Material durchgeführt werden. Auch ist die in dem Versuch gewählte Beschichtung des Formteils vor der WIP-Behandlung nicht zwingend erforderlich. Diese Beschichtung ist optional und wird von dem Fachmann gewählt werden, wenn sie wie in der vorstehenden Beschreibung dargelegt, vorteilhaft ist. Entscheidend ist allein der Umstand, dass an dem Grünteil und/oder Braunteil vor dem Sinterschritt ein hier als warmisostatisches Pressen bezeichneter Behandlungsschritt durchgeführt wird, um so bereits vor dem Sintern eine Erhöhung der Materialdichte zu erhalten.

## Patentansprüche

1. Verfahren zur Herstellung eines Formkörpers durch Sintern, mit folgenden Schritten
a. Bereitstellen eines ein Metall- und/oder Keramikpulver enthaltenden Ausgangsmaterials,
b. Formen eines Grünteils aus dem Ausgangsmaterial durch entweder Formen des Ausgangsmaterials, wenn dieses eine Mischung aus dem Metall- und/oder Keramikpulver und Bindermaterial aufweist, oder durch Einbringen eines Bindermaterials in ein aus dem Ausgangsmaterial gebildetes Pulverbett,
c. chemisches Entbindern und/oder Entbindern mittels eines Lösemittels des Grünteils zum Erhalten eines Braunteils,
d. thermisches Entbindern des in Schritt c. erhaltenen Braunteils,
e. Verdichten des Braunteils zu dem Formkörper durch Sintern,
**dadurch gekennzeichnet,**
**dass** das Braunteil nach dem Schritt c. und vor dem Schritt d. zunächst mit einem das in dem Braunteil noch vorhandene, durch das vorhergehende chemische Entbindern und/oder Entbindern mittels eines Lösungsmittels in Schritt c. nicht entfernte Bindermaterial erweichenden Weichmacher behandelt wird und weiterhin vor dem Schritt d. nach der Behandlung mit dem Weichmacher durch Beaufschlagen mit einem unter einem erhöhten Druck stehenden Medium einem isostatischen Pressvorgang unterzogen wird.

2. Verfahren nach Anspruch 1, **dadurch gekennzeichnet, dass** die Behandlung des Braunteils mit einem flüssigen Weichmacher erfolgt, insbesondere durch eine Tauchbehandlung.

3. Verfahren nach einem der vorhergehenden Ansprüche, **dadurch gekennzeichnet, dass** der isostatische Pressvorgang bei einer gegenüber Raumtemperatur erhöhten Temperatur durchgeführt wird, insbesondere bei einer Temperatur im Bereich von 30°C bis 200 °C.

4. Verfahren nach einem der vorhergehenden Ansprüche, **dadurch gekennzeichnet, dass** der isostatische Pressvorgang durch Beaufschlagen mit einem unter einem Druck von >60 bar, vorzugsweise >80 bar, insbesondere > 100 bar, dabei jedoch auch < 500 bar, insbesondere < 300 bar stehenden Medium durchgeführt wird.

5. Verfahren nach einem der vorhergehenden Ansprüche, **dadurch gekennzeichnet, dass** als das unter einem erhöhten Druck stehende Medium ein Gas, insbesondere ein Inertgas, oder eine Flüssigkeit verwendet wird.

6. Verfahren nach einem der vorhergehenden Ansprüche, **dadurch gekennzeichnet, dass** das Braunteil nach dem Behandeln mit dem Weichmacher und vor dem Beaufschlagen mit unter einem erhöhten Druck stehenden Medium mit einer die Außenflächen des Braunteils umschließenden Beschichtung, insbesondere einer polymerischen Beschichtung, versehen wird.

7. Verfahren nach Anspruch 6, **dadurch gekennzeichnet, dass** die Beschichtung aus einem chemisch und/oder lösungsmittelbasiert und/oder thermisch abtrennbaren Material gebildet wird.

8. Verfahren nach Anspruch 7, **dadurch gekennzeichnet, dass** die Beschichtung aus einem thermisch, mechanisch, chemisch und/oder lösungsmittelbasiert abtrennbaren Material gebildet wird und dass nach dem isostatischen Pressvorgang und vor dem Schritt d. die Beschichtung thermisch, mechanisch, chemisch und/oder mit einem Lösungsmittel entfernt wird.

9. Verfahren nach einem der vorhergehenden Ansprüche, **dadurch gekennzeichnet, dass** der nach Schritt c. und vor Schritt d. in das Braunteil eingebrachte Weichmacher nach dem durchführen des isostatischen Pressvorgangs mittels Beaufschlagen des Braunteils mit einem unter einem erhöhten Druck stehenden Medium und vor dem Sinterschritt e., insbesondere vor dem Schritt d, entfernt wird..

10. Verfahren nach einem der vorhergehenden Ansprüche, **dadurch gekennzeichnet, dass** das Formen des Grünteils in Schritt b. durch ein additives Formgebungsverfahren erfolgt.

11. Verfahren nach einem der Ansprüche 1 bis 9, **dadurch gekennzeichnet, dass** das Formen des Grünteilsin Schritt b. durch Metal Injection Moulding - MIM, durch Schlickerguss, durch Extrusion oder durch einen Formpressvorgang erfolgt.

12. Verfahren nach einem der vorhergehenden Ansprüche, **dadurch gekennzeichnet, dass** das Formteil pulvermetallurgisch hergestellt und in Schritt a. ein Metallpulver enthaltendes Ausgangsmaterial bereitgestellt wird.

13. Verfahren nach Anspruch 12, **dadurch gekennzeichnet, dass** als Metallpulver ein Pulver eines verglichen mit Stahl mit Sauerstoff reaktionsfreudigeren, reaktiven Metalls, insbesondere Titanpulver, ein Titanlegierungspulver, Aluminiumpulver, ein Aluminiumlegierungspulver, Magnesiumpulver oder ein Magnesiumlegierungspulver, verwendet wird.

14. Verfahren nach einem der Ansprüche 12 oder 13, **dadurch gekennzeichnet, dass** das Metallpulver ein Hartmetallpulver enthält.

15. Verfahren nach einem der Ansprüche 1 bis 11, **dadurch gekennzeichnet, dass** ein keramisches Formteil hergestellt und in Schritt a. ein Keramikpulver enthaltendes Ausgangsmaterial bereitgestellt wird.

## Claims

1. A method for producing a moulded article by sintering, comprising the following steps
a. Providing a starting material containing a metal and/or ceramic powder,
b. Moulding a green part from the starting material by either moulding the starting material when it comprises a mixture of the metal and/or ceramic powder and binder material, or by introducing a binder material into a powder bed formed from the starting material,
c. Chemical debinding and/or debinding by means of a solvent of the green part to obtain a brown part,
d. Thermal debinding of the brown part obtained in step c,
e. Compaction of the brown part to form the moulded body by sintering, **characterised in that**
after step c. and before step d., the brown part is first treated with a plasticiser which softens the binder material still present in the brown part and not removed by the preceding chemical debinding and/or debinding by means of a solvent in step c., and furthermore, before step d., after treatment with the plasticiser, is subjected to an isostatic pressing process by exposure to a medium under an elevated pressure.

2. A method according to claim 1, **characterised in that** the brown part is treated with a liquid plasticiser, in particular by immersion treatment.

3. A method according to one of the preceding claims, **characterised in that** the isostatic pressing process is carried out at a temperature higher than room temperature, in particular at a temperature in the range from 30°C to 200°C.

4. A method according to one of the preceding claims, **characterised in that** the isostatic pressing process is carried out by applying a medium under a pressure of > 60 bar, preferably > 80 bar, in particular > 100 bar, but also < 500 bar, in particular < 300 bar,

5. A method according to one of the preceding claims, **characterised in that** a gas, in particular an inert gas, or a liquid is used as the medium under increased pressure.

6. A method according to one of the preceding claims, **characterised in that** the brown part is provided with a coating, in particular a polymeric coating, enclosing the outer surfaces of the brown part after treatment with the plasticiser and before exposure to a medium under increased pressure.

7. A method according to claim 6, **characterised in that** the coating is formed from a chemically and/or solvent-based and/or thermally separable material.

8. A method according to claim 7, **characterised in that** the coating is formed from a material which can be removed thermally, mechanically, chemically and/or by means of a solvent, and **in that** after the isostatic pressing process and before step d. the coating is removed thermally, mechanically, chemically and/or with a solvent.

9. A method according to one of the preceding claims, **characterised in that** the plasticiser introduced into the brown part after step c. and before step d. is removed after the isostatic pressing operation has been carried out by subjecting the brown part to a medium under increased pressure and before sintering step e., in particular before step d.

10. A method according to one of the preceding claims, **characterised in that** the shaping of the green part in step b is carried out by an additive shaping process.

11. A method according to any one of claims 1 to 9, **characterised in that** the green part is formed in step b. by metal injection moulding - MIM, by slip casting, by extrusion or by a compression moulding process.

12. A method according to one of the preceding claims, **characterised in that** the moulded part is produced by powder metallurgy and in step a. a starting material containing metal powder is provided.

13. A method according to claim 12, **characterised in that** the metal powder used is a powder of a metal which is more reactive with oxygen than steel, in particular titanium powder, a titanium alloy powder, aluminium powder, an aluminium alloy powder, magnesium powder or a magnesium alloy powder.

14. A method according to one of claims 12 or 13, **characterised in that** the metal powder contains a hard metal powder.

15. A method according to one of claims 1 to 11, **characterised in that** a ceramic moulded part is produced and a starting material containing ceramic powder is provided in step a..

## Revendications

1. Procédé de fabrication d'un article moulé par frittage, comprenant les étapes suivantes
a. Fournir un matériau de départ contenant une poudre de métal et/ou de céramique,
b. Moulage d'une pièce verte à partir du matériau de départ, soit en moulant le matériau de départ lorsqu'il comprend un mélange de poudre métallique et/ou céramique et de liant, soit en introduisant un liant dans un lit de poudre formé à partir du matériau de départ,
c. Déliantage chimique et/ou le déliantage au moyen d'un solvant de la partie verte pour obtenir une partie brune,
d. Déliantage thermique de la partie brune obtenue à l'étape c,
e. Compaction de la partie brune pour former le corps moulé par frittage, **caractérisé par le fait que**
après l'étape c. et avant l'étape d., la partie brune est d'abord traitée avec un plastifiant qui ramollit le matériau liant encore présent dans la partie brune et non éliminé par le déliantage chimique et/ou le déliantage au moyen d'un solvant à l'étape c., et en outre, avant l'étape d., après le traitement avec le plastifiant, elle est soumise à un processus de pressage isostatique par exposition à un milieu sous une pression élevée.

2. Procédé selon la revendication 1, **caractérisé par le fait que** la partie brune est traitée avec un plastifiant liquide, notamment par immersion.

3. Procédé selon l'une des revendications précédentes, **caractérisé par le fait que** le processus de pressage isostatique est effectué à une température supérieure à la température ambiante, en particulier à une température comprise entre 30°C et 200°C.

4. Procédé selon l'une des revendications précédentes, **caractérisé par le fait que** le processus de pressage isostatique est effectué en appliquant un milieu sous une pression de > 60 bar, de préférence > 80 bar, en particulier > 100 bar, mais aussi < 500 bar, en particulier < 300 bar,

5. Procédé selon l'une des revendications précédentes, **caractérisé par** l'utilisation d'un gaz, en particulier d'un gaz inerte, ou d'un liquide comme milieu sous pression accrue.

6. Procédé selon l'une des revendications précédentes, **caractérisé par le fait que** la partie brune est pourvue d'un revêtement, en particulier d'un revêtement polymère, enveloppant les surfaces extérieures de la partie brune après traitement avec le plastifiant et avant exposition à un milieu sous pression accrue.

7. Procédé selon la revendication 6, **caractérisé par le fait que** le revêtement est formé à partir d'un matériau chimiquement et/ou à base de solvant et/ou thermiquement séparable.

8. Procédé selon la revendication 7, **caractérisé par le fait que** le revêtement est formé d'un matériau qui peut être enlevé thermiquement, mécaniquement, chimiquement et/ou au moyen d'un solvant, et **par le fait qu'**après le processus de pressage isostatique et avant l'étape d., le revêtement est enlevé thermiquement, mécaniquement, chimiquement et/ou au moyen d'un solvant.

9. Procédé selon l'une des revendications précédentes, **caractérisé en ce que** le plastifiant introduit dans la pièce brune après l'étape c. et avant l'étape d. est éliminé après l'opération de pressage isostatique en soumettant la pièce brune à un milieu sous pression accrue et avant l'étape e. de frittage, en particulier avant l'étape d.

10. Procédé selon l'une des revendications précédentes, **caractérisé par le fait que** la mise en forme de la pièce verte à l'étape b est réalisée par un procédé de mise en forme additive.

11. Procédé selon l'une quelconque des revendications 1 à 9, **caractérisé par le fait que** la partie verte est formée à l'étape b. par moulage par injection de métal - MIM, par coulée en barbotine, par extrusion ou par un procédé de moulage par compression.

12. Procédé selon l'une des revendications précédentes, **caractérisé par le fait que** la pièce moulée est produite par métallurgie des poudres et qu'à l'étape a. un matériau de départ contenant de la poudre métallique est fourni.

13. Procédé selon la revendication 12, **caractérisé par le fait que** la poudre métallique utilisée est une poudre d'un métal plus réactif à l'oxygène que l'acier, notamment une poudre de titane, une poudre d'alliage de titane, une poudre d'aluminium, une poudre d'alliage d'aluminium, une poudre de magnésium ou une poudre d'alliage de magnésium.

14. Procédé selon l'une des revendications 12 ou 13, **caractérisé par le fait que** la poudre de métal contient une poudre de métal dur.

15. Procédé selon l'une des revendications 1 à 11, **caractérisé par** la production d'une pièce moulée en céramique et la fourniture d'un matériau de départ contenant de la poudre de céramique à l'étape a..
